# EUROPÄISCHE PATENTANMELDUNG

(11) **EP 1 860 178 A1**
(43) Veröffentlichungstag der Anmeldung: **28.11.2007**
(21) Anmeldenummer: 06013780.9
(22) Anmeldetag: 04.07.2006
(51) Int. Cl.: C12G 3/04

(54) **Alkoholhaltiges Mischgetränk**

(30) Priorität: 26.05.2006 DE 202006008532 U
(71) Anmelder: Hengerer-Müller, Christina, 74074 Heilbronn (DE); Müller, Jürgen, 74074 Heilbronn (DE); Gehrmann, Manfred, 74081 Heilbronn (DE)
(72) Erfinder: Hengerer-Müller, Christina, 74074 Heilbronn (DE); Müller, Jürgen, 74074 Heilbronn (DE); Gehrmann, Manfred, 74081 Heilbronn (DE)
(74) Vertreter: Müller, Hans

(57) **Zusammenfassung**

Ein alkoholhaltiges Mischgetränk (14) besteht aus einer Mischung aus Tee und Wein.

## Beschreibung

### TECHNISCHES GEBIET

Die Erfindung betrifft ein alkoholhaltiges Mischgetränk. Neben einsortigen Getränken wie Fruchtsäfte, Mineralwässer, Teegetränke, Weine und dergleichen gibt es in verstärktem Maße Mischgetränke. Je nach ihren Bestandteilen können solche Mischgetränke auch alkoholhaltig sein.

### STAND DER TECHNIK

Tee wird von Teepflanzen gewonnen, die gemäß der botanischen Einordnung nach Linné bezeichnet werden als "Camellia sinensis", ergänzt durch jeweilige Herkunftsangaben "bohea" für Teepflanzen aus China, "japoinea" für Teepflanzen aus Japan und "assamice" für Teepflanzen aus Assam/Indien.

Es ist bekannt, Teegetränke mit fruchtigen Zusätzen zu versehen. So können Grünen und Schwarzen Teesorten beispielsweise bei ihrem Verarbeitungsprozess beim Dämpfen Blüten zugegeben werden. Während des Aufbrühens ist es darüber hinaus bekannt, Gewürzezusätze oder beispielsweise Minzblätter dem Aufguss zuzugeben. Bei aromatisiertem Grünen und Schwarzen Tee werden verschiedene Teepartien miteinander vermischt. Der Teemischung werden dann Aromen (Flüssigaromen), Kräuter, Blüten, Gewürze oder auch Fruchtstückchen zugegeben. Besonders im Wellnessbereich ist die Verwendung von Tee aufgrund der dem Tee zugesprochenen antioxidativen und antikarzinogenen Wirkungseigenschaften beliebt und weit verbreitet. Auch die leider bei Jugendlichen sehr beliebten alkoholischen Mixgetränke, bei denen fruchtige Getränke mit Alkohol vermischt werden, seien nicht unerwähnt.

Von den alkoholischen Getränken ist der Wein ein allseits beliebtes Getränk. Die zum Herstellen von Wein wirtschaftlich interessantesten Weintrauben sind Früchte der sogenannten Echten Weinrebe (vitis vinifera) und ihrer zahlreichen Unterarten und Sorten. Wein wird durch vollständige oder teilweise alkoholische Gärung aus frischen oder auch eingemaischten Weintrauben oder Traubenmost hergestellt. Dieses Getränk wird auch bei der Herstellung von Wermutweinen oder sonstigen Kräuterweinen als Grundlage verwendet. Je nach Art der Kelterung werden aus hellen Trauben Weissweine, aus rot gekelterten blauen oder roten Trauben Rotweine und aus hell gekelterten Rotweintrauben Roséweine hergestellt. Nach den Traubensorten unterscheidet man in Deutschland beispielsweise Riesling, Grau- oder Weißburgunder, Schwarzriesling und vor allem in Baden-Württemberg Lemberger und insbesondere Trollinger. Einem mäßigen Weingenuss wird auch eine gewisse medizinisch-therapeutische Wirkung zugesagt. So wird insbesondere älteren Menschen ärztlicherseits sogar dazu geraten, abends ein Glas Rotwein zu trinken.

### DARSTELLUNG DER ERFINDUNG

Ausgehend von diesem vorbekannten Stand der Technik liegt der Erfindung die Aufgabe zugrunde, ein neues alkoholhaltiges Mischgetränk anzugeben.

Diese Erfindung ist durch die Merkmale des Hauptanspruchs gegeben. Sinnvolle Weiterbildungen der Erfindung sind Gegenstand von sich an den Hauptanspruch anschließenden weiteren Ansprüchen.

Das erfindungsgemäße Mischgetränk zeichnet sich durch eine Mischung aus Tee und Rotwein aus. So konnte bei einem Mischungsverhältnis zwischen 5 und 95 Prozent, insbesondere zwischen 50 und 80 Prozent Wein, dabei insbesondere bei einem Anteil an Wein von etwa 70 Prozent festgestellt werden, dass durch die entsprechende Zugabe von Tee die typischen Aromastoffe des Weins verstärkt und abgerundet werden und dass das Mischgetränk ein vollmundiges Mundgefühl hinterlässt. Der Geschmack dieses Mischgetränks hebt sich damit stark ab von dem im Stand der Technik bekannten alkoholischen Mischgetränk, bei dem Wein Mineralwasser zugesetzt wird. Ein solches verwässertes Weingetränk schmeckt fade, leer und eben wie ein verdünnter Wein, wässrig.

Sofern bei der Herstellung des Mischgetränkes der Tee in seinem nicht mehr ganz heißen Zustand, insbesondere bei etwa 70 Grad Celsius dem Wein zugegeben wird, bleibt das klare Weinaussehen des Weines erhalten. Auch verändert sich der Geschmack dieses Mischgetränkes nicht in Richtung Tee. Dies gilt insbesondere dann, wenn als Tee Grüntee und als Wein Rotwein und dabei insbesondere Trollingerwein verwendet wird. Demgegenüber trübt sich das Mischgetränk farblich ein, wenn nicht heißer sondern bereits stark abgekühlter Tee dem Wein zugegeben wird.

Das erfindungsgemäße Getränk vereinigt die dem Wein einerseits und dem Tee andererseits zugesagten jeweiligen gesundheitsfördernden und belebenden Eigenschaften.

Als Tee eignen sich insbesondere alle sogenannten echten Tees, wie der unfermentierte Grüne Tee, der halbfermentierte Oolong Tee, der postfermentierte Tee (Pu' Erh Tee) und der vollfermentierte Schwarze Tee und andererseits auch sogenannte teeähnlichen Erzeugnisse. Unter letzteren Teesorten werden Kräutertee (Melissentee, Brennnesseltee, Kamillentee), Gewürztee (Nelkentee, Anistee), Früchtetee (Hagebuttentee, Fencheltee) und koffeinhaltige oder koffeinfreie Teesorten aus Südamerika, die als Matetee beziehungsweise Rotbuschtee bei uns bekannt sind, verstanden.

Als Tee können auch aromatische, insbesondere Grüne Tees verwendet werden. Solche aromatischen Tees sind beliebt, wenn nur hartes Wasser zur Teeaufbereitung zur Verfügung steht.

Das erfindungsgemäße alkoholhaltige Mischgetränk kann beispielsweise wie folgt hergestellt werden. Rotwein, wie insbesondere Trollinger, wird in üblicher Weise hergestellt. Der für das Mischgetränk erforderliche Tee wird ebenfalls in üblicher Weise hergestellt. So können beispielsweise zwei bis fünf Gramm Teeblätter pro Liter mit heißem, insbesondere kochendem Wasser aufgegossen werden. Nach etwa zwei bis drei Minuten Ziehzeit wird der Tee dann bei einer Temperatur von etwa 70 Grad Celsius mit dem fertigen Trollingerwein im Verhältnis 95 bis 5 Prozent, insbesondere 70 Prozent Wein und dementsprechend 5 bis 95 Prozent, insbesondere 30 Prozent Tee gemischt.

Ein solches Getränk stellt geschmacklich ein Weingetränk dar. Durch die Zugabe von Tee bleibt der weinige Geschmack erhalten. Darüber hinaus werden dem Wein die dem Tee allgemein, aber insbesondere Grünem Tee zugesprochenen gesunden Eigenschaften zugegeben. Ein solches Mischgetränk stellt nicht nur ein geschmackliches sondern auch ein gesundheitlich sehr gutes Produkt dar.

Weitere Vorteile und Merkmale der Erfindung sind den in den Ansprüchen ferner angegebenen Merkmalen zu entnehmen.

### KURZE BESCHREIBUNG DER ZEICHNUNG

In der Zeichnung wird das alkoholhaltige Mischgetränk nach der Erfindung beispielhaft dargestellt.

### WEGE ZUM AUSFÜHREN DER ERFINDUNG

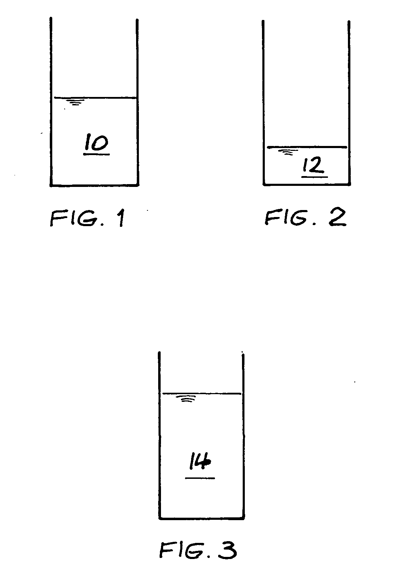

Gemäß Fig. 1 wird zuerst Rotwein im vorliegenden Beispielsfall Trollingerwein 10 in üblicher Weise hergestellt. Anschließend wird Grüner Tee 12 hergestellt, ebenfalls in üblicher Weise. Dabei wird ein sehr milder Aufguss hergestellt. Im vorliegenden Beispielsfall wird etwas weniger als sechs Gramm, insbesondere zwei bis fünf Gramm Grüner Tee mit kochendem Wasser aufgebrüht. Der Trollingerwein 10 gemäß Fig. 1 und der Grüne Tee 12 gemäß Fig. 2 werden dann zu dem Mischgetränk 14 gemäß Fig. 3 zusammengemischt. Dabei wird der Trollingerwein und der Grüne Tee im Verhältnis 70 Prozent Wein und 30 Prozent Tee gemischt. Der heiß, insbesondere kochend hergestellte Aufguss des Grünen Tees 12 wird nicht mehr kochend im vorliegenden Beispielsfall etwa bei 70 bis 80 Grad Celsius dem Wein 10 zugegeben. Es hat sich überraschend gezeigt, dass das gemäß Fig. 3 so erzeugte Mischgetränk 14 über Wochen klar bleibt und geschmacklich dem Wein zuzuordnen ist. Die typischen Aromastoffe des Weins werden darüber hinaus nicht nur erhalten sondern sogar verstärkt.

Die Trinktemperatur des Mischgetränks 14 liegt etwa zwischen 12 und 18 Grad Celsius. Das aus Trollingerwein hergestellte Mischgetränk 14 hat eine ziegelrote, klar und glänzende Farbe und ist aufgrund des Teegehalts in der Säure reduziert. Sein Alkoholgehalt liegt bei knapp 9 Volumenprozent.

## Patentansprüche

1. Alkoholhaltiges Mischgetränk (14),
- **gekennzeichnet durch**
- eine Mischung aus Tee und Wein.

2. Mischgetränk nach Anspruch 1,
- **gekennzeichnet durch**
- einen Anteil an Wein zwischen 5 Prozent und 95 Prozent.

3. Mischgetränk nach Anspruch 2,
- **dadurch gekennzeichnet, dass**
- der Anteil an Wein etwa 50 bis 80 Prozent, insbesondere 70 Prozent beträgt.

4. Mischgetränk nach einem der vorstehenden Ansprüche,
- **dadurch gekennzeichnet, dass**
- der Wein aus den Früchten der Echten Weinrebe (vitis vinifera) und dessen Unterarten und Sorten hergestellt ist.

5. Mischgetränk nach einem der vorstehenden Ansprüche,
- **dadurch gekennzeichnet, dass**
- der Wein Rotwein ist.

6. Mischgetränk nach Anspruch 5,
- **dadurch gekennzeichnet, dass**
- der Rotwein ein Trollingerwein (10) ist.

7. Mischgetränk nach einem der vorstehenden Ansprüche,
- **dadurch gekennzeichnet, dass**
- der Tee von als Camellia sinensis bezeichneten Teepflanzen hergestellt ist.

8. Mischgetränk nach einem der vorstehenden Ansprüche,
- **dadurch gekennzeichnet, dass**
- der Tee Grüner Tee (12) ist.

9. Mischgetränk nach einem der vorstehenden Ansprüche,
- **dadurch gekennzeichnet, dass**
- der Tee ein postfermentierter Tee, insbesondere Grüner Tee ist.

10. Mischgetränk nach einem der vorstehenden Ansprüche,
- **dadurch gekennzeichnet, dass**
- der Tee ein aromatisierter Tee, insbesondere Grüner Tee ist.
